# DEMANDE DE BREVET EUROPEEN

(11) **EP 4 201 197 A1**
(43) Date de publication de la demande: **28.06.2023**
(21) Numéro de dépôt: 22214058.4
(22) Date de dépôt: 16.12.2022
(51) Int. Cl.: A01G 17/14

(54) **ECARTEUR DE FILS DE VIGNE**

(30) Priorité: 27.12.2021 FR 2114532
(71) Demandeur: Berger-Leslavergne, Thomas, 51700 Troissy (FR)
(72) Inventeur: Berger-Leslavergne, Thomas, 51700 Troissy (FR)
(74) Mandataire: Axe PI

(57) **Abrégé**

L'invention concerne un écarteur (1) de fils de vigne (101, 102) comprenant un fil écarteur (2) s'étendant selon un axe d'allongement principal (A1). Le fil écarteur (2) comporte un moyen d'accroché (3) agencé pour être rapporté sur un piquet de vigne. Le moyen d'accroché (3) est interposé entre un premier moyen de maintien (11) conformé pour maintenir au moins un premier fil de vigne (101) et un deuxième moyen de maintien (12) conformé pour maintenir au moins un deuxième fil de vigne (102). L'invention se caractérise en ce que le moyen d'accroche (3) comprend une première boucle (21) qui s'étend dans un plan longitudinal (P1) parallèle à l'axe d'allongement principal (A1) et une deuxième boucle (22) comprenant une première portion (22a) qui s'étend selon un premier axe d'élongation (B1) sécant au plan longitudinal (P1).

## Description

### DOMAINE TECHNIQUE

L'invention est du domaine des écarteurs de fils de vigne. Elle a pour objet un tel écarteur.

### TECHNIQUE ANTÉRIEURE

Dans le domaine viticole, une installation de palissage de vigne comprend des piquets qui sont espacés les uns des autres de quelques mètres. Ces piquets sont alignés avec une rangée de ceps de vigne plantés pour la production de raisins ; ces piquets sont appelés « les piquets intermédiaires » et l'ensemble formé par les piquets et les ceps est appelé « une route de vignes ».

Sur ces piquets intermédiaires est accroché un fil lieur sur lequel sont liées les charpentes des ceps. Chaque rangée de piquets est délimitée par des piquets de fin et de début de route de vignes ; ces piquets sont appelés « les piquets de tête ».

Entre les piquets de tête, sont accrochés, généralement par l'intermédiaire d'une glissière, des fils tendus qui permettent de maintenir les différents brins des ceps de vigne en position verticale et permettent ainsi à ces brins de ne pas s'effondrer sous le poids des raisins jusqu'à la période des vendanges ; ces fils sont appelés « les fils releveurs ».

Entre les piquets de tête, selon la pratique du vigneron, on peut également trouver des fils tendus en partie basse des piquets, ces fils sont appelés « les fils de pieds ». Ces fils de pieds permettent de guider à la verticale la pousse des brins de pieds, qui poussent à la base du cep de vigne et qui serviront à la taille l'année suivante.

De nos jours, avec la réduction importante de l'utilisation des herbicides, les viticulteurs travaillent de plus en plus le sol, lors d'opérations de charruage, de tonte, de broyage des sarments de vigne mis au sol lors de la taille par exemple, avec des outils mécaniques montés sur un tracteur ou un chenillard et cela implique une absence d'obstacle au sol.

On connaît ainsi des écarteurs qui sont prévus pour maintenir des fils de vigne, indifféremment fils releveurs ou fils de pieds, au-dessus du sol, ces écarteurs étant fixés aux piquets intermédiaires à une hauteur fixe et prévus pour maintenir écartés les fils de vigne entre lesquels les brins des ceps de vigne se dressent. Plus particulièrement, chaque écarteur comporte un moyen d'accroche agencé pour être rapporté sur un piquet de vigne et des moyens de maintien conformés pour maintenir chacun des fils de vigne.

Le document brevet FR2903570 divulgue par exemple un dispositif d'écarteur, fixé sur un piquet, constitué d'un fil de métal plié, et qui comprend deux brins, munis chacun à leur extrémité libre d'un moyen apte à emprisonner un fil releveur, et reliés l'un à l'autre au travers d'un pliage en forme de boucle élastique permettant de rappeler en écartement les deux brins, et également une fixation au piquet.

Le brevet US8935878 décrit également un écarteur en matériau déformable et est prévu spécifiquement pour un piquet particulier "oméga" et un piquet particulier en "T". Les boucles permettent la déformation élastique des brins et fixent de façon définitive l'écarteur au piquet

Toutefois, il apparaît que la position de tels écarteurs est conditionnée par la forme et la section des piquets et la longueur des brins. Une fois montés, ces écarteurs, en matériau déformable, ne peuvent plus être démontés pour ajuster la hauteur d'utilisation et fixent définitivement l'écarteur au piquet, ce qui constitue une contrainte majeure si l'on veut pouvoir adapter la hauteur des fils notamment releveurs à la hauteur de végétation pour un maintien et un guidage optimal des brins.

Ces écarteurs sont ainsi spécifiques à la forme et à la section d'un seul piquet (intermédiaire) particulier, ce qui constitue une contrainte majeure, par exemple lors d'un remplacement de piquet (intermédiaire) par un autre type de piquet pouvant induire et contraindre à un remplacement de l'écarteur utilisé, si les piquets (intermédiaires) diffèrent.

On connaît aussi des écarteurs qui sont prévus pour maintenir les fils de pieds à 20 cm du sol environ. Selon les pratiques du vigneron, ces fils de pieds sont temporairement élevés à mi-hauteur des piquets ou même tout en haut des piquets pour que ces fils de pieds ne gênent pas pour le travail du sol.

### PROBLÈME TECHNIQUE

Les piquets intermédiaires sont généralement rectilignes et allongés selon une direction principale. Les piquets intermédiaires présentent dans un plan transverse qui est orthogonal à la direction principale, un profil et des dimensions variables. Il en résulte que les écarteurs sont généralement spécifiques à un type de piquet intermédiaire particulier, ce qui constitue une contrainte majeure, par exemple lors d'un remplacement de piquets intermédiaires qui induit un remplacement des écarteurs, si les piquets intermédiaires diffèrent. Il en résulte également que les écarteurs sont fixés à une seule hauteur sans pouvoir être démontés, ce qui constitue une contrainte majeure si l'on veut pouvoir adapter la hauteur des fils notamment releveurs à la hauteur de végétation pour un maintien et un guidage optimal des brins.

### SOLUTION TECHNIQUE

La présente invention s'inscrit dans ce contexte et propose un écarteur de fils de vigne qui est adapté à plusieurs piquets différents existants de conformation quelconque, c'est-à-dire de sections différentes, dont la section est par exemple en forme de U, de C, de W, de L, de L inversé, de carré, et qui comprend un fil écarteur s'étendant selon un axe d'allongement principal. Le fil écarteur comporte un moyen d'accroche agencé pour être rapporté sur un piquet de vigne. Le moyen d'accroche est interposé entre un premier moyen de maintien conformé pour maintenir un ou plusieurs fils de vigne, par exemple deux fils de vigne, préférentiellement un fil releveur et/ou fil de pieds, et un deuxième moyen de maintien conformé pour maintenir un ou plusieurs fils de vigne, par exemple deux fils de vigne, préférentiellement un fil releveur et/ou fil de pieds.

Selon la présente invention, le moyen d'accroche est caractérisé en ce qu'il comprend une première boucle qui s'étend dans un plan longitudinal parallèle à l'axe d'allongement principal et une deuxième boucle comprenant une première portion qui s'étend selon un premier axe d'élongation sécant au plan longitudinal.

L'écarteur comprend en outre avantageusement l'une quelconque au moins des caractéristiques techniques suivantes, prises seules ou en combinaison :
- le premier axe d'élongation et le plan longitudinal forment un premier angle qui est compris entre 80° et 100°,
- projetée dans un plan transversal orthogonal à l'axe d'allongement principal, la deuxième boucle comporte un profil triangulaire,
- la deuxième boucle comprend une deuxième portion qui s'étend selon un deuxième axe d'élongation qui est orthogonal au premier axe d'élongation et une troisième portion qui s'étend selon un troisième axe d'élongation sécant avec le premier axe d'élongation et le deuxième axe d'élongation,
- le deuxième axe d'élongation et le troisième axe d'élongation forment un deuxième angle qui est compris entre 30° et 40°,
- la première boucle est conformée en U,
- la première boucle comprend une première branche et une deuxième branche qui sont parallèles et séparées d'une première distance,
- la première boucle est d'une hauteur qui est supérieure à quatre fois la première distance,
- le long de l'axe d'allongement principal, le premier axe d'élongation et le troisième axe d'élongation sont distants d'une deuxième distance qui est inférieure à la moitié de la première distance,
- la première portion est d'une première longueur qui est supérieure à une deuxième longueur de la deuxième portion,
- la deuxième longueur est égale à 75% de la première longueur, à +/- 10% près,
- l'un quelconque au moins du premier moyen de maintien et du deuxième moyen de maintien est conformé en S, en étrier et/ou en une hélice.

Un tel écarteur est utilisé et agencé pour être rapporté sur un piquet de vigne à n'importe quelle hauteur dudit piquet pour maintenir des fils releveurs écartés, et notamment pour maintenir des fils de pieds écartés et hors sol dans le premier moyen de maintien ou le deuxième moyen de maintien, le piquet de vigne pouvant être associé à un fil de blocage agencé en W qui coopère avec le fil écarteur pour maintenir les fils de vigne.

### BRÈVE DESCRIPTION DES DESSINS

L'invention et les avantages qui en découlent seront mieux compris à la lecture de la description et des modes de réalisation non limitatifs qui suivent, au regard des figures annexées dans lesquelles :
La Figure 1 représente en perspective une première variante de réalisation d'un écarteur selon la présente invention.
La Figure 2 représente en perspective une deuxième variante de réalisation d'un écarteur selon la présente invention.
La Figure 3 représente une vue de détail d'une première forme de réalisation d'un moyen de maintien constitutif de l'écarteur représenté sur la Figure 2.
La Figure 4 représente une vue de détail d'une deuxième forme de réalisation d'un moyen de maintien constitutif de l'écarteur représenté sur la Figure 2.
La Figure 5 représente une troisième forme de réalisation d'un moyen de maintien constitutif de l'écarteur représenté sur les Figures 1 et 2.
La Figure 6 représente une quatrième forme de réalisation d'un moyen de maintien constitutif de l'écarteur représenté sur les Figures 1 et 2.
La Figure 7 représente une cinquième forme de réalisation d'un moyen de maintien constitutif de l'écarteur représenté sur les Figures 1 et 2.
La Figure 8 représente une première utilisation d'un écarteur selon la présente invention sur un premier piquet de vigne.
La Figure 9 représente une deuxième utilisation d'un écarteur selon la présente invention sur un deuxième piquet de vigne.
La Figure 10 représente une troisième utilisation d'un écarteur selon la présente invention sur un troisième piquet de vigne.
La Figure 11 représente une quatrième utilisation d'un écarteur selon la présente invention sur un quatrième piquet de vigne.

### DESCRIPTION DES MODES DE RÉALISATION

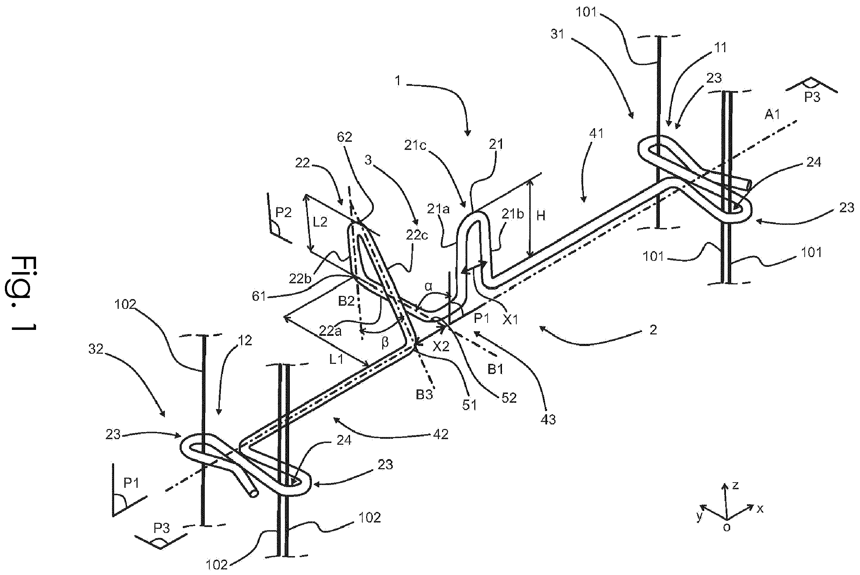

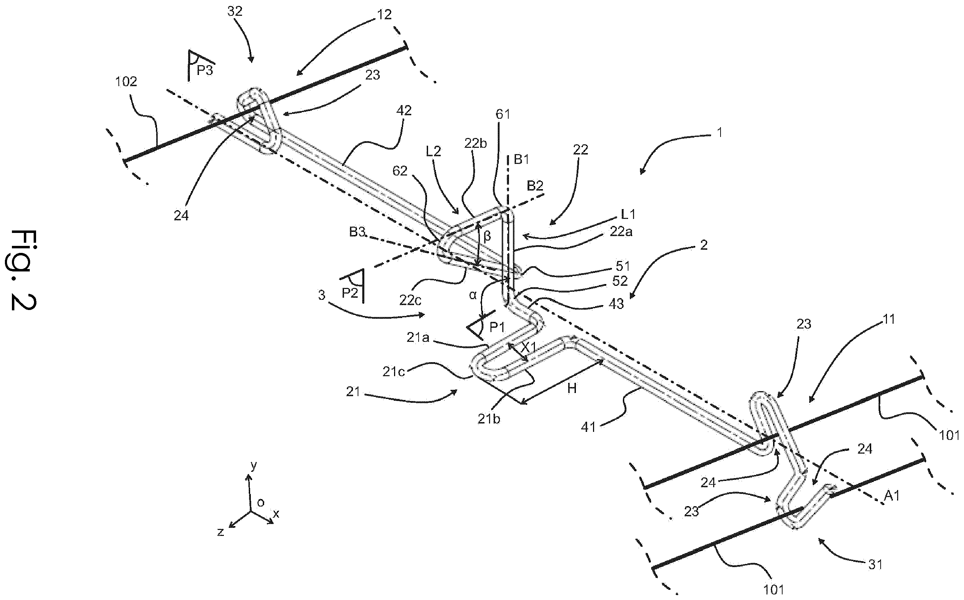

Sur les Figures 1 et 2, deux variantes de réalisation d'un écarteur 1 de la présente invention sont représentées dans un repère orthonormé Oxyz. Selon ces variantes de réalisation, l'écarteur 1 comprend un fil écarteur 2 qui s'étend selon un axe d'allongement principal A1. On comprend en cela qu'une élongation principale du fil écarteur 2 est ménagée le long de l'axe d'allongement principal A1, cet axe d'allongement principal A1 étant parallèle à un axe Ox du repère orthonormé Oxyz.

Le fil écarteur 2 est par exemple réalisé en un matériau métallique, acier galvanisé ou inoxydable notamment, de section circulaire et d'un diamètre notamment compris entre 2 et 3 mm, préférentiellement de l'ordre de 2,7 mm à +/- 5% près.

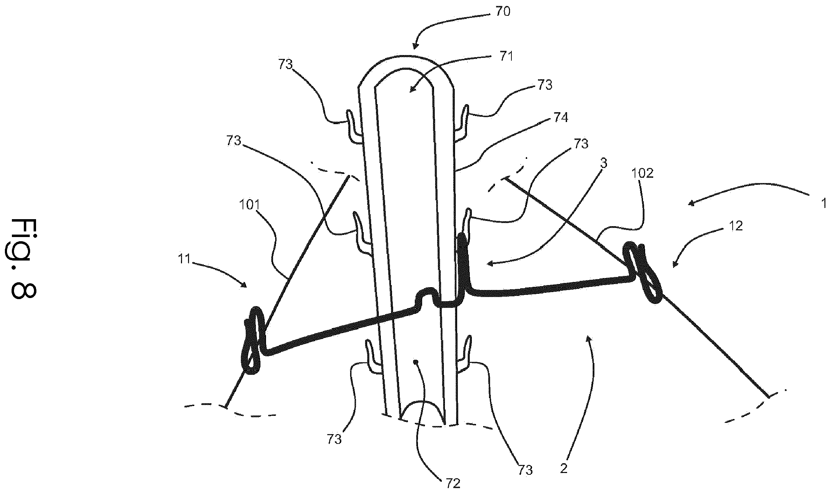

Le fil écarteur 2 comporte un moyen d'accroche 3 qui est agencé pour être rapporté sur un piquet de vigne 70, tel qu'illustré sur les figures 8 à 11. Le moyen d'accroche 3 est prévu pour permettre un maintien du fil écarteur 2 sur le piquet de vigne 70.

Le fil écarteur 2 comporte aussi un premier moyen de maintien 11 conformé pour maintenir au moins un premier fil de vigne 101 et un deuxième moyen de maintien 12 conformé pour maintenir au moins un deuxième fil de vigne 102.

Par fil de vigne, on entend un fil releveur et/ou un fil de pieds ou analogue.

Avantageusement, le moyen d'accroche 3 est interposé entre le premier moyen de maintien 11 conformé pour maintenir un ou plusieurs premiers fils de vigne 101, par exemple deux premiers fils de vigne 101, à savoir un fil releveur et/ou un fil de pieds, et le deuxième moyen de maintien 12 conformé pour maintenir un ou plusieurs deuxièmes fils de vigne 102, par exemple deux deuxièmes fils de vigne 102, à savoir un fil releveur et/ou un fil de pieds.

Le premier moyen de maintien 11 équipe par exemple une première extrémité 31 du fil écarteur 2 et le deuxième moyen de maintien 12 équipe par exemple une deuxième extrémité 32 du fil écarteur 2. On note que le premier moyen de maintien 11 et/ou le deuxième moyen de maintien 12 sont aptes à maintenir au moins un fil de vigne 101, 102, par exemple deux fils de vigne 101, 102 de nature quelconque, tel qu'un fil releveur et/ou un fil de pieds ou analogue.

Le moyen d'accroche 3 est interposé entre le premier moyen de maintien 11 et le deuxième moyen de maintien 12, en étant préférentiellement placé à égale distance du premier moyen de maintien 11 et du deuxième moyen de maintien 12. Autrement dit, le moyen d'accroche 3 est de préférence situé au milieu du fil écarteur 2, à égale distance de la première extrémité 31 et de la deuxième extrémité 32.

Le moyen d'accroche 3 comprend avantageusement deux boucles 21, 22, dont une première boucle 21 qui s'étend dans un plan longitudinal P1, parallèle à l'axe d'allongement principal A1, et préférentiellement comprenant l'axe d'allongement principal A1, et dont une deuxième boucle 22 qui comprend une première portion 22a s'étendant selon un premier axe d'élongation B1 qui est sécant au plan longitudinal P1. Autrement dit, le fil écarteur 2 n'est pas entièrement compris dans le plan longitudinal P1 puisqu'au moins la première portion 22a de la deuxième boucle 22 s'étend selon le premier axe d'élongation B1 qui est sécant au plan longitudinal P1.

Plus particulièrement, le premier axe d'élongation B1 et le plan longitudinal P1 forment un premier angle a qui est compris entre 80° et 100°. Selon une forme de réalisation, le premier angle a est de l'ordre de 90°, à +/- 5% près.

La deuxième boucle 22 comprend une deuxième portion 22b et une troisième portion 22c, qui sont complémentaires de la première portion 22a, pour former ensemble la deuxième boucle 22. La deuxième portion 22b s'étend selon un deuxième axe d'élongation B2 qui est orthogonal au premier axe d'élongation B1. La troisième portion 22c s'étend selon un troisième axe d'élongation B3 qui est sécant avec le premier axe d'élongation B1 et le deuxième axe d'élongation B2.

Le deuxième axe d'élongation B2 et le troisième axe d'élongation B3 forment un deuxième angle β qui est compris entre 30° et 40°. On comprend en cela que la deuxième boucle 22, vue depuis l'axe d'allongement principal A1, présente un format légèrement évasé pour ce qui concerne l'agencement entre eux du premier axe d'élongation B1 et du troisième axe d'élongation B3. Aussi, le premier axe d'élongation B1 et le troisième axe d'élongation B3 sont concourants entre eux et concourants avec l'axe d'allongement principal A1 et le deuxième axe d'élongation B2.

Plus particulièrement, la deuxième boucle 22 comporte un profil triangulaire, lorsque la deuxième boucle 22 est projetée orthogonalement dans un plan transversal P2 perpendiculaire à l'axe d'allongement principal A1 et parallèle au plan Oyz. Plus particulièrement, ce profil est un profil d'un triangle rectangle, dont la première portion 22a et la deuxième portion 22b forment les côtés disposés en angle droit et dont la troisième portion 22c forme l'hypoténuse.

La première boucle 21, quant à elle, est conformée en U et s'étend dans le plan longitudinal P1. Aussi, la première boucle 21 et la deuxième boucle 22 s'étendent sensiblement dans des plans sécants, voire orthogonaux entre eux.

La première boucle 21 comprend une première branche 21a et une deuxième branche 21b qui sont parallèles entre elles et séparées d'une première distance X1, la première distance X1 étant mesurée le long de l'axe d'allongement principal A1 entre les génératrices des branches 21a, 21b de la première boucle 21.

La première boucle 21 est d'une hauteur H qui est supérieure à quatre fois la première distance X1, la hauteur H étant mesurée entre un premier brin de fil 41 qui relie la première boucle 21 au premier moyen de maintien 11 et un sommet 21c de la première boucle 21 qui relie la première branche 21a et la deuxième branche 21b. On comprend que le premier moyen de maintien 11 est celui des moyens de maintien 11, 12 qui est le plus proche de la première boucle 21. Autrement dit, en parcourant le fil écarteur 2, on rencontre successivement, le premier moyen de maintien 11, la première boucle 21 du moyen d'accroche 3, la deuxième boucle 22 du moyen d'accroche 3 et le deuxième moyen de maintien 12. On note à ce stade de la description que la deuxième boucle 22 et le deuxième moyen de maintien 12 sont reliés l'un à l'autre par un deuxième brin de fil 42. On note aussi que la première boucle 21 et la deuxième boucle 22 sont reliées l'une à l'autre par un troisième brin de fil 43. Le premier brin de fil 41, le deuxième brin de fil 42 et le troisième brin de fil 43 sont rectilignes et s'étendent selon des axes respectifs qui sont parallèles à l'axe d'allongement principal A1.

Le long de l'axe d'allongement principal A1, le premier axe d'élongation B1 et le troisième axe d'élongation B3 sont distants d'une deuxième distance X2, visible sur la Figure 1, qui est inférieure à la moitié de la première distance X1, la deuxième distance X2 étant prise parallèlement à l'axe d'allongement principal A1 entre un premier point de jonction 51 entre la première portion 22a et le deuxième brin de fil 42, et un deuxième point de jonction 52 entre la première portion 22a et le troisième brin 43.

De préférence, la première portion 22a est d'une première longueur L1 qui est supérieure à une deuxième longueur L2 de la deuxième portion 22b. La première longueur L1 est prise parallèlement au premier axe d'élongation B1 entre le deuxième point de jonction 52 et un premier point de raccord 61 entre la première portion 22a et la deuxième portion 22b. La deuxième longueur L2 est prise parallèlement au deuxième axe d'élongation B2 entre le premier point de raccord 61 et un deuxième point de raccord 62 entre la deuxième portion 22b et la troisième portion 22c. La deuxième longueur L2 est par exemple égale à 75% de la première longueur L1, à +/- 10% près.

Le premier moyen de maintien 11 et le deuxième moyen de maintien 12 s'étendent dans un plan latéral P3, qui est orthogonal au plan longitudinal P1 et au plan transversal P2, et donc parallèle au plan Oxy.

Selon la première variante de réalisation illustrée sur la Figure 1, le premier moyen de maintien 11 et le deuxième moyen de maintien 12 sont identiques. Plus particulièrement, le premier moyen de maintien 11 et le deuxième moyen de maintien 12 sont l'un et l'autre conformés en S. Ainsi, le premier moyen de maintien 11 et le deuxième moyen de maintien 12 comprennent des boucles de maintien 23 qui ménagent au moins un passage 24 pour un ou plusieurs fils de vigne 101, 102 correspondants. Les boucles de maintien 23 sont allongées selon un même axe sensiblement orthogonal à l'axe d'allongement principal A1.

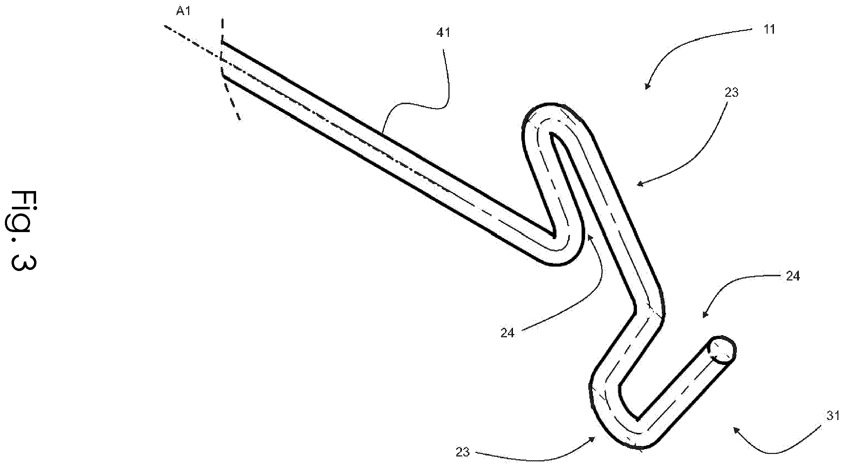

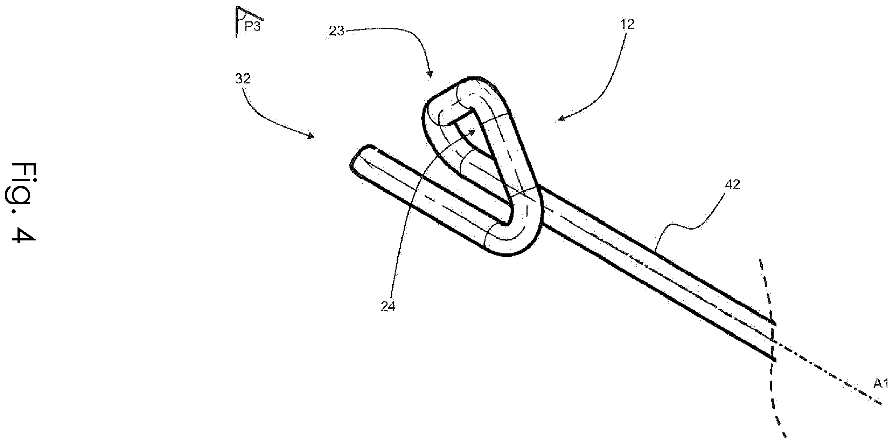

Selon la deuxième variante de réalisation illustrée sur la Figure 2, le premier moyen de maintien 11, également représenté sur la Figure 3, et le deuxième moyen de maintien 12, également illustré sur la Figure 4, sont distincts.

Le premier moyen de maintien 11 est conformé en S et comprend également des boucles de maintien 23 qui ménagent au moins un passage 24 pour un ou plusieurs premiers fils de vigne 101. Par contre, les boucles de maintien 23 sont allongées selon des axes distincts et sécants entre eux et avec l'axe d'allongement principal A1.

Le deuxième moyen de maintien 12 est conformé en une unique boucle de maintien 23 qui ménage un unique passage 24 préférentiellement pour un deuxième fil de vigne 102. Projetée dans le plan latéral P3, la boucle de maintien 23 présente par exemple un profil sensiblement triangulaire.

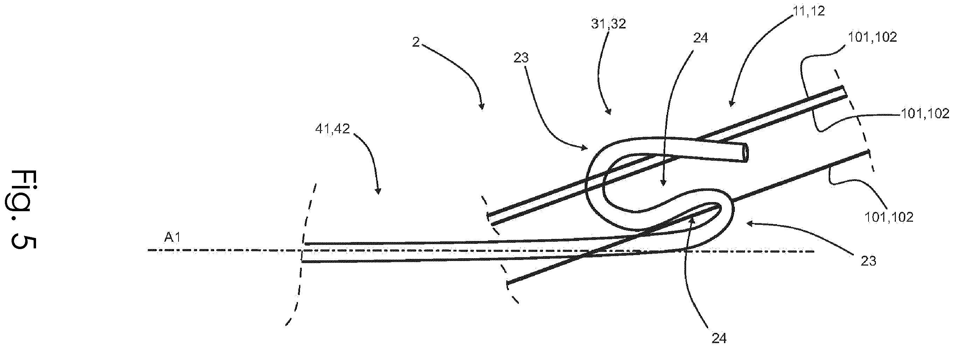

Selon la forme de réalisation des moyens de maintien 11, 12 illustrée sur la Figure 5, les boucles de maintien 23 sont en pluralité et sont allongées selon un axe sensiblement parallèle à l'axe d'allongement principal A1.

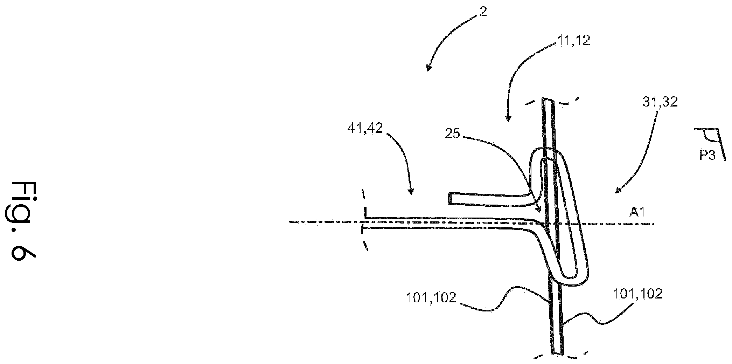

Selon la forme de réalisation des moyens de maintien 11, 12 illustrée sur la Figure 6, le premier moyen de maintien 11 et/ou le deuxième moyen de maintien 12 est conformé en un étrier qui ménage un espace 25 pour un ou plusieurs fils de vigne 101, 102 correspondants.

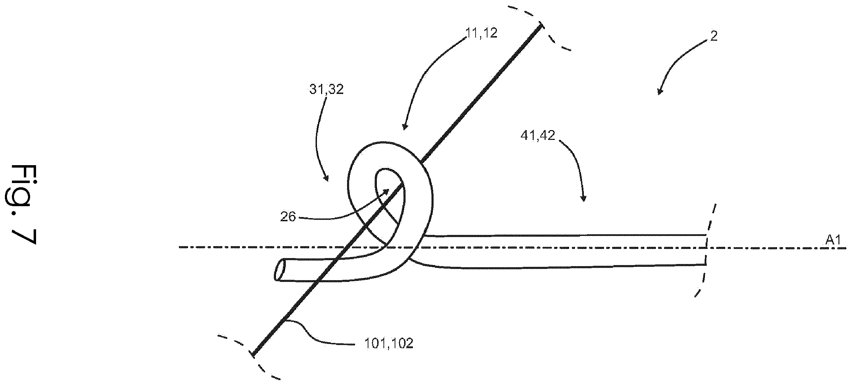

Selon la forme de réalisation des moyens de maintien 11, 12 illustrée sur la Figure 7, le premier moyen de maintien 11 et/ou le deuxième moyen de maintien 12 est conformé en une hélice qui ménage un logement 26 pour un seul fil de vigne 101, 102 correspondants. Préférentiellement, lorsque le moyen de maintien 11 ou 12 est conformé en une hélice, l'autre moyen de maintien 11 ou 12 n'est pas conformé en une hélice mais avantageusement selon l'une des autres conformations décrites précédemment selon l'invention.

On note que le premier moyen de maintien 11 et le deuxième moyen de maintien 12 d'un même fil écarteur 2 sont susceptibles d'être d'une conformation respective similaire ou distincte, notamment telle que l'une quelconque de celles qui viennent d'être décrites, ou d'une quelconque combinaison de ces dernières, sans déroger aux règles de la présente invention.

En se reportant sur la Figure 8, un fil écarteur 2 est porté par un piquet de vigne 70 agencé en U. Le piquet vigne 70 comporte une rainure 71 bordée par une face interne 72 du piquet de vigne 70 et des crochets 73 ménagés sur une surface externe 74 du piquet de vigne 70. On note que la première boucle 21 est apte à s'insérer aisément à l'intérieur de la rainure 71 tandis que la deuxième boucle 22 est apte s'agripper à l'un quelconque des crochets 73. Ces crochets 73 étant multiples et répartis à différentes hauteurs le long de la surface externe 74 du piquet de vigne 70, il en résulte qu'il est possible de maintenir les fils de vigne 101, 102 écartés à une hauteur quelconque du piquet de vigne 70.

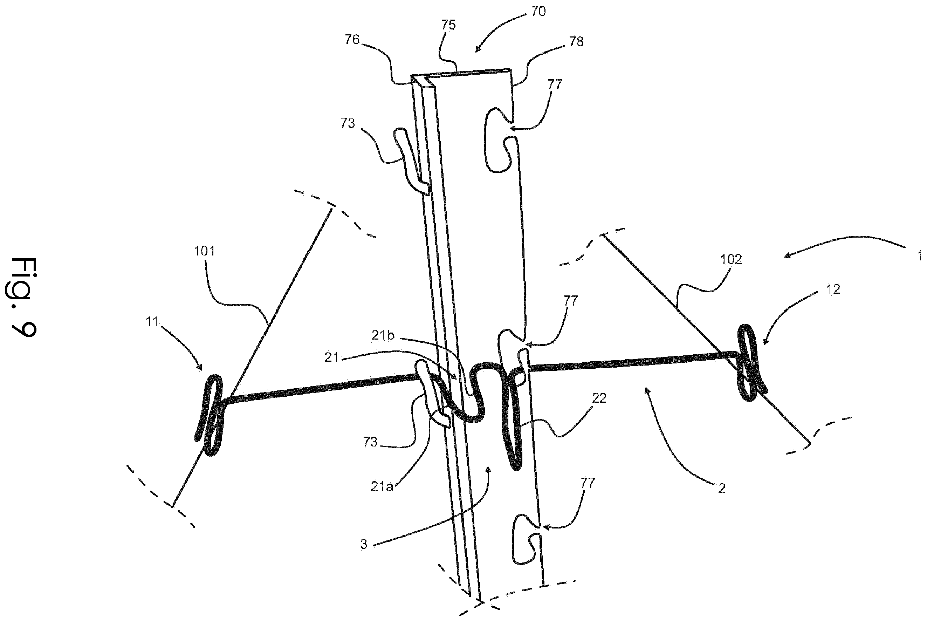

En se reportant sur les Figures 9 à 11, un fil écarteur 2 est porté par un piquet de vigne 70 agencé en L. Le piquet vigne 70 comporte un premier pan 75 et un deuxième pan 76 sensiblement orthogonal au premier pan 75.

Sur la Figure 9, le premier pan 75 comporte des encoches 77 qui sont débouchantes sur une tranche d'extrémité 78 du premier pan 75. Le deuxième pan 76 comporte des crochets 73 qui sont ménagés en vis à vis des encoches 77. On note que la première boucle 21 est apte à recevoir le deuxième pan 76 entre les branches 21a, 21b qui la composent tandis que la deuxième boucle 22 est apte se loger à l'intérieur de l'une quelconque des encoches 77. Ces crochets 73 et ces encoches 76 étant multiples et répartis à différentes hauteurs le long du piquet de vigne 70, il en résulte qu'il est possible de maintenir les fils de vigne 101, 102 écartés à une hauteur quelconque du piquet de vigne 70.

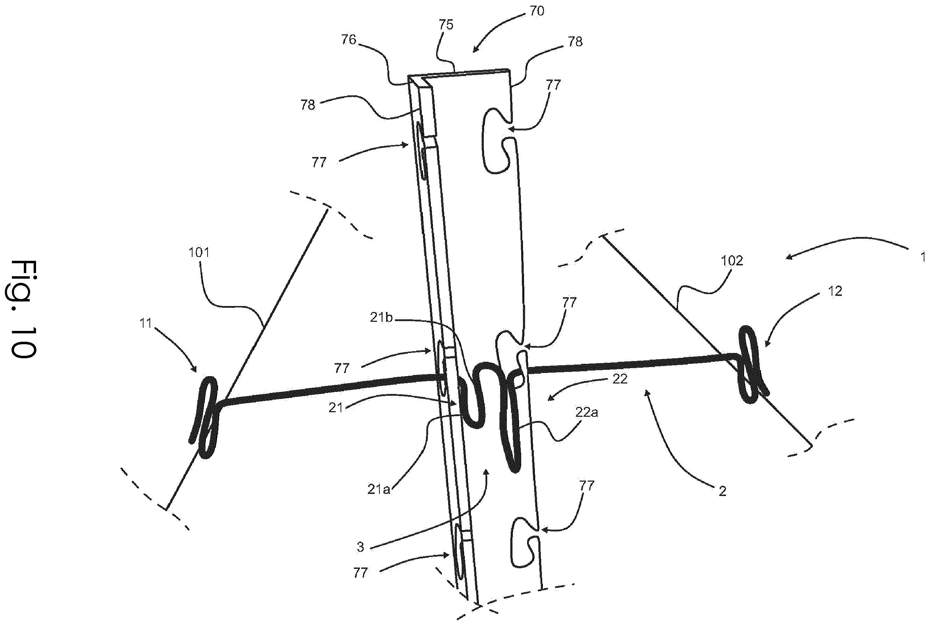

Sur la Figure 10, le premier pan 75 et le deuxième pan 76 comporte chacun des encoches 77 qui sont débouchantes sur la tranche d'extrémité 78 respective du premier pan 75 et du deuxième pan 76. On note que la première boucle 21 et la deuxième boucle 22 sont toutes les deux interposées entre les encoches 77 du premier pan 75 et du deuxième pan 76, la première branche 21a de la première boucle jouxtant, voire s'appuyant contre le deuxième pan 76 et la première portion 22a de la deuxième boucle 22 jouxtant, voire s'appuyant contre le premier pan 75. Ces encoches 77 étant multiples et répartis à différentes hauteurs le long du piquet de vigne 70, il en résulte qu'il est possible de maintenir les fils de vigne 101, 102 écartés à une hauteur quelconque du piquet de vigne 70.

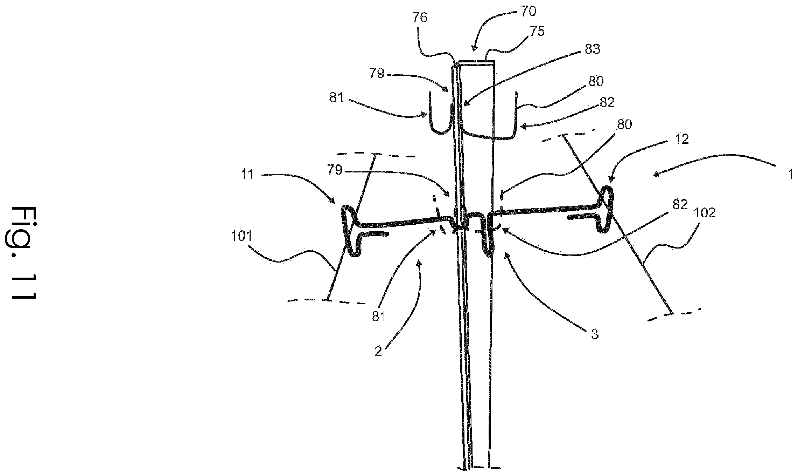

Sur la Figure 11, le deuxième pan 76 comporte des orifices 79 ménagés à son travers et le piquet de vigne 70 est associé à un fil de blocage 80. Le fil de blocage 80 est agencé en W et comprend une boucle centrale 83 conformée en U et interposée entre deux hampes 81, 82 agencées en J. La boucle centrale 83 est prévue pour être logée à l'intérieur de l'un des orifices 79, de telle sorte qu'une première hampe 81 du fil de blocage 80 pend d'un côté du deuxième pan 76 tandis qu'une deuxième hampe 82 du fil de blocage 80 pend de l'autre côté du deuxième pan 76. On note que la première boucle 21 est apte à recevoir le deuxième pan 76 entre les branches 21a, 21b qui la composent tandis que la deuxième boucle 22 est apte à recevoir la deuxième hampe 82. Les orifices 79 du piquet de vigne 70 étant multiples et répartis à différentes hauteurs le long du piquet de vigne 70, il en résulte qu'il est possible de maintenir les fils de vigne 101, 102 écartés à une hauteur quelconque du piquet de vigne 70. On remarque sur cette figure que l'un des fils de blocage 80 est représenté en ligne pointillée pour faciliter la compréhension de l'agencement du fil écarteur 2 et du fil de blocage 80.

Ces dispositions sont telles qu'un tel écarteur 1 est apte à être rapporté sur un piquet de vigne 70 de conformation quelconque, tel qu'il vient d'être décrit, c'est-à-dire de sections différentes, dont la section est par exemple en forme de U, de C, de W, de L, de L inversé, de carré, pouvant comprendre un fil de blocage 80 agencé en W, un tel écarteur 1 étant facilement rapportable sur le piquet de vigne 70, tout en étant simple et peu couteux à réaliser.

De plus, la forme générale de l'écarteur 1 permet de l'utiliser à toutes les hauteurs des piquets de vigne 70, et notamment des piquets intermédiaires. En effet, les piquets intermédiaires sont équipés de crochets 73 et d'encoches 77 ou d'orifices 79 généralement espacés de cinq centimètres, ou de fils de blocage 80 agencés en W, ce qui permet de positionner les fils de vigne 101, 102 à la bonne hauteur par rapport à la hauteur de la végétation.

Il en résulte que la disposition spatiale spécifique des boucles 21 et 22 dimensionnées et agencées de sorte à permettre l'utilisation de l'écarteur sur les différents types de piquets et à différentes hauteurs comme le montre les figures 8 à 11 de la présente invention assure le maintien de l'écarteur sur le piquet quel que soit la section du piquet. L'écarteur selon l'invention est ainsi fixé au piquet et peut être déplacé (monté/descendu) ou remplacé facilement et rapidement.

Une telle disposition permet le renvoi du brin de fil 42 de façon à ce qu'il reste parallèle au brin de fil 41 (tel qu'illustré par les Figures 1 et 2) et ce quel que soit le piquet sur lequel l'écarteur est monté ; il permet également d'assurer le maintien de l'écarteur sur le piquet quel que soit la section du piquet. Aussi, une telle disposition permet d'avoir une position de l'écarteur centrée par rapport à l'axe de la route de vignes quel que soit la largeur du piquet sur lequel l'écarteur est posé.

D'autre part, les formes géométriques des moyens de maintien 11, 12 permettent d'utiliser un tel écarteur 1 que les fils de vigne 101, 102 soient tendus ou non. A titre d'exemple, le premier moyen de maintien 11 agencé en spirale permet à cet écarteur 1 de rester accrocher à au moins un premier fil de vigne 101, le deuxième moyen de maintien 12 en forme d'étrier permettant d'accrocher au moins un deuxième fil de vigne 102 que ce dernier soit en tension vers le sol ou vers le haut. En effet, selon la typologie de la parcelle de vigne, concave ou convexe, les fils de vigne 101, 102 vont soit vers le haut d'une installation de palissage comprenant ces piquets de vigne 70, dans le cas d'un sol concave, soit vers le bas de l'installation de palissage, dans le cas d'un sol convexe.

## Revendications

1. Ecarteur (1) de fils de vigne (101, 102) comprenant un fil écarteur (2) s'étendant selon un axe d'allongement principal (A1) et comportant un moyen d'accroche (3) agencé pour être rapporté sur un piquet de vigne (70), le moyen d'accroche (3) étant interposé entre un premier moyen de maintien (11) conformé pour maintenir au moins un premier fil de vigne (101) et un deuxième moyen de maintien (12) conformé pour maintenir au moins un deuxième fil de vigne (102), **caractérisé en ce que** le moyen d'accroche (3) comprend une première boucle (21) qui s'étend dans un plan longitudinal (P1) parallèle à l'axe d'allongement principal (A1) et une deuxième boucle (22) comprenant une première portion (22a) qui s'étend selon un premier axe d'élongation (B1) sécant au plan longitudinal (P1).

2. Ecarteur (1) selon la revendication précédente, **caractérisé en ce que** le premier axe d'élongation (B1) et le plan longitudinal (P1) forment un premier angle (a) qui est compris entre 80° et 100°.

3. Ecarteur (1) selon l'une quelconque des revendications précédentes, **caractérisé en ce que**, projetée dans un plan transversal (P2) orthogonal à l'axe d'allongement principal (A1), la deuxième boucle (22) comporte un profil triangulaire.

4. Ecarteur (1) selon l'une quelconque des revendications précédentes, **caractérisé en ce que** la deuxième boucle (22) comprend une deuxième portion (22b) qui s'étend selon un deuxième axe d'élongation (B2) qui est orthogonal au premier axe d'élongation (B1) et une troisième portion (22c) qui s'étend selon un troisième axe d'élongation (B3) sécant avec le premier axe d'élongation (B1) et le deuxième axe d'élongation (B2).

5. Ecarteur (1) selon la revendication 4, **caractérisé en ce que** le deuxième axe d'élongation (B2) et le troisième axe d'élongation (B3) forment un deuxième angle (β) qui est compris entre 30° et 40°.

6. Ecarteur (1) selon l'une quelconque des revendications précédentes, **caractérisé en ce que** la première boucle (21) est conformée en U.

7. Ecarteur (1) selon la revendication 6, **caractérisé en ce que** la première boucle (21) comprend une première branche (21a) et une deuxième branche (21b) qui sont parallèles et séparées d'une première distance (X1).

8. Ecarteur (1) selon la revendication 7, **caractérisé en ce que** la première boucle (21) est d'une hauteur (H) qui est supérieure à quatre fois la première distance (X1).

9. Ecarteur (1) selon les revendications 4 et 7, **caractérisé en ce que** le long de l'axe d'allongement principal (A1), le premier axe d'élongation (B1) et le troisième axe d'élongation (B3) sont distants d'une deuxième distance (X2) qui est inférieure à la moitié de la première distance (X1).

10. Ecarteur (1) selon l'une quelconque des revendications 4 à 9, **caractérisé en ce que** la première portion (22a) est d'une première longueur (L1) qui est supérieure à une deuxième longueur (L2) de la deuxième portion (22b).

11. Ecarteur (1) selon la revendication 10, **caractérisé en ce que** la deuxième longueur (L2) est égale à 75% de la première longueur (L1), à +/- 10% près.

12. Ecarteur (1) selon l'une quelconque des revendications précédentes, **caractérisé en ce que** l'un quelconque au moins du premier moyen de maintien (11) et du deuxième moyen de maintien (12) est conformé en S, en étrier et/ou en une hélice.

13. Utilisation d'un écarteur (1) selon l'une des revendications 1 à 12 agencé pour être rapporté sur un piquet de vigne (70) à n'importe quelle hauteur dudit piquet pour maintenir des fils releveurs écartés.

14. Utilisation d'un écarteur (1) selon l'une des revendications 1 à 12 pour maintenir des fils de pieds écartés et hors sol dans le premier moyen de maintien (11) ou le deuxième moyen de maintien (12).

15. Utilisation d'un écarteur (1) selon la revendication 13 et 14 sur un piquet de vigne (70) associé à un fil de blocage (80) agencé en W.
